Europäisches Patentamt

European Patent Office

Office européen des brevets

(11) Veröffentlichungsnummer: **0 584 476 A1**

# (12) EUROPÄISCHE PATENTANMELDUNG

(21) Anmeldenummer: 93109635.8

(22) Anmeldetag: 16.06.93

(51) Int. Cl.5: **B31F 1/28**, B32B 31/00, B23Q 1/14, B23Q 11/00

(30) Priorität: 24.08.92 DE 4228074

(43) Veröffentlichungstag der Anmeldung: 02.03.94 Patentblatt 94/09

(84) Benannte Vertragsstaaten: DE FR GB IT

(71) Anmelder: BHS-Bayerische Berg-, Hütten- und Salzwerke Aktiengesellschaft HAUPTVERWALTUNG, Ridlerstrasse 75 D-80335 München 2(DE)

(72) Erfinder: Titz, Felix Hüttenwerk 6 D-8481 Weiherhammer(DE)

Erfinder: Schasse, Heinrich Mindener Strasse 19 D-30890 Barsinghausen(DE)

Erfinder: Mosburger, Hans Lupinenweg 16 D-8481 Weiherhammer(DE)

(74) Vertreter: Eder, Eugen, Dipl.-Ing. Patentanwälte Dipl.-Ing. E. Eder Dipl.-Ing. K. Schieschke Elisabethstrasse 34 D-80796 München (DE)

(54) **Vorrichtung zur Spalteinstellung zwischen Bauteilen, insbesondere Walzen von Wellpappenmaschinen.**

(57) Die Vorrichtung zur Einstellung eines Spaltes zwischen Bauteilen, insbesondere Walzen von Wellpappenmaschinen, mit einer die relativ zueinander bewegbaren Bauteile auf Spalt einstellbaren Einstelleinrichtung weist einen Abstandshalter (17) zwischen den einstellbaren Bauteilen (2, 3; 4, 6) auf, der keinen oder einen nur sehr geringen Wärmeausdehnungskoeffizienten besitzt, wobei der Abstandshalter eine solche Länge aufweist, daß die Bauteile sich auch bei Wärmeveränderung nicht berühren können.

EP 0 584 476 A1

Rank Xerox (UK) Business Services
(3.10/3.09/3.3.4)

Die Erfindung betrifft eine Vorrichtung zur Spalteinstellung zwischen Bauteilen, insbesondere Walzen von Wellpappenmaschinen mit den Merkmalen des Oberbegriffs des Patentanspruches 1.

Aus der EP-A1-0 383 414 ist es bekannt, an einseitigen Wellpappenmaschinen die Abstände zwischen zueinander bewegbaren Bauteilen, z.B. Riffelwalze und Anpreßwalze, abhängig von Temperaturwerten einzustellen, die sich bei Erhitzung solcher Bauteile und der Wärmeübertragung auf das Gestell der Wellpappenmaschine ergeben. Hierzu ist am Gestell der einseitigen Wellpappenmaschine ein Temperaturfühler angebaut, der über eine Steuereinrichtung die Exzentrizität der Lagerung eines der Bauteile über einen Stellmotor einstellt. Nachteilig ist hierbei, daß eine solche temperaturabhängig geregelte Spalteinstellung zwischen Walzen aufwendig und bei Ausfall oder Störung der elektronischen Steuereinrichtung nicht sichergestellt ist, daß sich die Walzen nicht berühren, was zu einer Beschädigung der Walzenoberflächen führen kann.

Der Erfindung liegt die Aufgabe zugrunde, eine Vorrichtung zur Spalteinstellung zwischen Bauteilen, insbesondere Walzen von Wellpappenmaschinen zu schaffen, die einfach aufgebaut ist und sicher eine Berührung und Beschädigung der zusammenwirkenden, zueinander einstellbaren Bauteile verhindert.

Die Erfindung löst diese Aufgabe mit den kennzeichnenden Merkmalen des Patentanspruches 1.

Dadurch, daß ein Abstandshalter für die zueinander einstellbaren Bauteile vorgesehen ist, der keinen oder nur einen sehr geringen Wärmeausdehnungskoeffizienten besitzt und der dafür sorgt, daß die Oberflächen der zusammenwirkenden Bauteile einander niemals berühren können, wird eine Beschädigung der Oberfläche dieser Bauteile bei Störungen der Einstellvorrichtung und elektronischen Steuerung sicher vermieden.

Nach einer Ausgestaltung der Erfindung ist der Abstandshalter von einem Stab aus einem Faserverbundmaterial, z.B. Kohlefaserverbundwerkstoff gebildet, dessen Enden mit Abstandsflächen an den zueinander einstellbaren Gestellen für die Bauteile zusammenwirken.

Weitere Ausgestaltungen der Erfindung ergeben sich aus den übrigen Unteransprüchen.

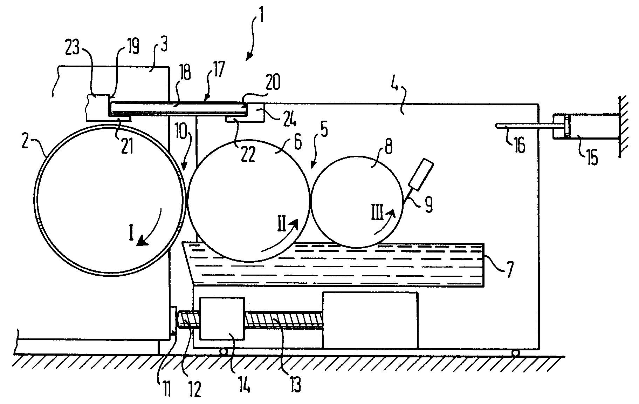

Die Erfindung wird nachfolgend anhand eines in der Zeichnung dargestellten Ausführungsbeispiels näher erläutert.

Die Zeichnung Zeigt eine schematische Seitenansicht eines Teils einer einseitigen Wellpappenmaschine.

Die Wellpappenmaschine 1 weist unter anderem eine Riffelwalze 2 auf, die in einem raumfesten Gestell 3 gelagert ist. Sie wird in der angegebenen Pfeilrichtung I angetrieben.

In einem verschiebbaren Gestell 4 ist ein Leimwerk 5 gelagert. Die Leimübertragswalze 6 taucht in eine mit Leim gefüllte Leimwanne 7 ein. Die Leimübertragswalze 6 ist in der angegebenen Pfeilrichtung II angetrieben.

Mit der Leimübertragswalze 6 arbeitet eine Dosierwalze 8 zusammen, die in Pfeilrichtung III angetrieben ist. Mit der Dosierwalze 8 arbeitet ein Abstreifer 9 zusammen.

Die Leimübertragswalze 6 ist mit einem Spalt 10 zur Riffelwalze 2 einstellbar.

Zur Einstellung des Spaltes 10 besitzt das raumfeste Gestell 3 einen Anschlag 11 für das Ende 12 einer mechanisch oder elektrisch angetriebenen Einstellspindel 13. Diese ist in einer Spindelnuß 14 geführt, welche am Gestell 4 des Leimwerkes 5 befestigt ist.

Zusätzlich wird das Gestell 4 durch eine hydraulische Zylinderkolbeneinheit 15 beaufschlagt. Hierzu ist die Kolbenstange 16 dieser Zylinderkolbeneinheit 15 fest mit dem Gestell 4 verbunden.

Wird die Wellpappenmaschine 1 in Betrieb genommen, dehnen sich die Gestelle 3, 4 und gegebenenfalls auch die aus Metall bestehende Einstellspindel 13 durch die auftretende Betriebserwärmung in horizontaler Richtung aus.

Wird die Einstellung des Spaltes 10 in kaltem Zustand der Wellpappenanlage 1 vorgenommen, vergrößert sich der Spalt 10 infolge der Betriebserwärmung. Würde die Einstellung des Spaltes 10 erst nach Betriebserwärmung erfolgen, könnte sich der Spalt 10 in kaltem Zustand der Maschine soweit verringern, daß eine Berührung der Walzen 2 und 6 erfolgt. Hierdurch könnte eine Beschädigung der Oberflächen diese Walzen erfolgen.

Um eine solche Berührung der Walzen 2 und 6 und damit einer zu kleinen Spalteinstellung zu vermeiden, ist vorgesehen, daß zwischen den Gestellen 3 und 4 ein Abstandshalter 17 vorhanden ist, der die Annäherung der beiden Walzen bis zur Berührung ausschließt. Vorzugsweise wird dieser Abstandshalter 17 von einem Stab 18 gebildet. Dieser Stab 18 besteht aus einem Material mit einem äußerst kleinen Wärmeausdehnungskoeffizienten, vorzugsweise mit dem Wärmeausdehnungskoeffizienten $\alpha = 0 \times k^{-1}$. Ein solcher Stab 18 kann zum Beispiel aus einem kohlefaserverstärkten Kunststoff hergestellt werden. Da Kohlefaser einen negativen Wärmeausdehnungskoeffizienten besitzt, kann mit einer exakten Wahl der Faserrichtung und des verwendeten Harzes ein Stab mit dem Wärmeausdehnungskoeffizenten $\alpha = 0 \times k^{-1}$ hergestellt werden.

Die Länge des Stabes 18 kann so bemessen sein, daß die beiden Walzen 2, 6 sich gerade nicht berühren.

Die Enden des Stabes 18 stützen sich ggf. gegen Anschlagflächen 19, 20 der Gestelle 3, 4 ab. Sie liegen ferner auf unterstützenden Flächen 21, 22 dieser Anschläge 23, 24 auf.

Der Stab 18 kann auch aus einem anderen Material mit sehr geringen Wärmeausdehnungskoeffizenten, z.B. Quarz bestehen.

Anstatt eine Stablänge zu verwenden, die gewährleistet, daß sich die Walzen 2 und 6 nicht berühren, ist es auch möglich, Stäbe mit solcher Länge einzusetzen, daß die jeweils gewünschten Spaltwerte sicher gewährleistet werden. Für jede gewünschte Spalteinstellung gibt es dann eine entsprechende Länge des Stabes 18.

**Patentansprüche**

1. Vorrichtung zur Einstellung eines Spaltes zwischen Bauteilen, insbesondere Walzen von Wellpappenmaschinen,
   mit einer die relativ zueinander bewegbaren Bauteile auf Spalt einstellbaren Einstelleinrichtung,
   dadurch gekennzeichnet,
   daß ein Abstandshalter (17) zwischen den einstellbaren Bauteilen (2, 3; 4, 6) angeordnet ist, der keinen oder einen sehr geringen Wärmeausdehnungskoeffizienten besitzt und
   daß der Abstandshalter eine solche Länge besitzt, daß die Bauteile sich auch bei Wärmeveränderung nicht berühren können.

2. Vorrichtung nach Anspruch 1, dadurch gekennzeichnet, daß der Abstandshalter (17) aus Verbundfasermaterial ist.

3. Vorrichtung Anspruch 1 oder 2, dadurch gekennzeichnet, daß der Abstandhalter ein Stab (18) ist, dessen Enden gegen Anschläge (23, 24) an den Gestellen (3, 4) der Bauteile (2, 6) wirken.

4. Vorrichtung nach Anspruch 3, dadurch gekennzeichnet, daß der Stab (18) an beiden Enden lose auf einer Unterstützungsfläche (21, 22) aufliegt bzw. so geführt ist, daß die Wärmedehnung der umgebenden Bauteile nicht behindert wird.

5. Vorrichtung nach Anspruch 3 und 4, dadurch gekennzeichnet, daß die Stablänge jeweils dem gewünschten Spaltabstand der Bauteile (2, 6) entspricht.

6. Vorrichtung nach Anspruch 3, dadurch gekennzeichnet, daß die Stablänge entsprechend dem gewünschten Spaltabstand korrigiert werden kann.

Europäisches
Patentamt

**EUROPÄISCHER RECHERCHENBERICHT**

Nummer der Anmeldung

EP 93 10 9635

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | EP-A-0 383 414 (MITSUBISHI JUKOGYO KABUSHIKI KAISHA)<br>--- | 1 | B31F1/28<br>B32B31/00<br>B23Q1/14<br>B23Q11/00 |
| A | US-A-2 720 910 (ROCKSTROM ET AL)<br>* Spalte 3, Zeile 54 - Zeile 55; Anspruch 2; Abbildung 1 *<br>--- | 1 | |
| A | PATENT ABSTRACTS OF JAPAN<br>vol. 011, no. 377 (M-649)9. Dezember 1987<br>& JP-A-62 148 059 ( MITSUBISHI HEAVY IND LTD )<br>* Zusammenfassung *<br><br>----- | 1 | |

| | RECHERCHIERTE SACHGEBIETE (Int. Cl.5) |
|---|---|
| | B31F<br>B32B<br>B29C<br>B23Q<br>B02C |

Der vorliegende Recherchenbericht wurde für alle Patentansprüche erstellt

| Recherchenort | Abschlußdatum der Recherche | Prüfer |
|---|---|---|
| DEN HAAG | 11 OKTOBER 1993 | PIPPING L.E.L. |

KATEGORIE DER GENANNTEN DOKUMENTE

X : von besonderer Bedeutung allein betrachtet
Y : von besonderer Bedeutung in Verbindung mit einer
      anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
      nach dem Anmeldedatum veröffentlicht worden ist
D : in der Anmeldung angeführtes Dokument
L : aus andern Gründen angeführtes Dokument
..............................................................................................
& : Mitglied der gleichen Patentfamilie, übereinstimmendes
      Dokument

EPO FORM 1503 03.82 (P0403)